## Europäisches Patentamt
## European Patent Office
## Office européen des brevets

(11) Veröffentlichungsnummer: **0 183 203 B1**

(12) # EUROPÄISCHE PATENTSCHRIFT

(45) Veröffentlichungstag der Patentschrift:
**01.03.89**

(51) Int. Cl.⁴: **A 01 C 5/06**, A 01 C 7/20

(21) Anmeldenummer: **85114856.9**

(22) Anmeldetag: **22.11.85**

(54) **Sämaschine.**

(30) Priorität: **24.11.84 DE 3442872**

(43) Veröffentlichungstag der Anmeldung:
**04.06.86 Patentblatt 86/23**

(45) Bekanntmachung des Hinweises auf die Patenterteilung:
**01.03.89 Patentblatt 89/9**

(84) Benannte Vertragsstaaten:
**DE FR GB NL SE**

(56) Entgegenhaltungen:
**EP-A- 0 170 825**
**AU-A- 512 556**
**DE-A- 1 938 050**
**DE-A- 2 735 902**
**DE-B- 1 196 891**
**DE-C- 3 141 078**
**US-A- 1 556 899**

(73) Patentinhaber: **Amazonen-Werke H. Dreyer GmbH & Co. KG, Postfach 51, D-4507 Hasbergen-Gaste (DE)**

(72) Erfinder: **Gattermann, Bernd, Eichenwall 3, D-2872 Hude i.O. (DE)**
Erfinder: **Gehrke, Rudolf, Lerchenweg 6, D-2990 Papenburg 2 (DE)**

(74) Vertreter: **Patentanwälte Grünecker, Kinkeldey, Stockmair & Partner, Maximilianstrasse 58, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung betrifft eine Sämaschine gemäss des Oberbegriffes des Anspruches 1.

Eine derartige Sämaschine ist bereits durch die DE-C-31 41 078 bekanntgeworden. Diese Sämaschine weist zur besseren Saatgutablage in den Laufradspuren in diesen Spuren angeordnete als Lockerungsschare ausgebildete Hackschare auf. Diese Hackschare ermöglichen eine Ablage des Saatgutes in dem verfestigen Boden der Laufradspuren. Nachteilig ist jedoch, dass kein Lockerungseffekt unterhalb der Säfurche erreicht wird. Die Verdichtung des Bodens durch die Laufräder der Sä- und/oder der Zugmaschine setzt sich jedoch bis in tieferen Bodenschichten fort, so dass der Boden unterhalb des Säfurchenbodens, auf dem das Saatgut abgelegt wird, stark verfestigt bleibt. Die Nährstoffversorgung aus tieferen Bodenschichten wird erschwert und führt zu Auflaufverzögerungen und Wachstumsstörungen des Getreides und wirkt sich somit negativ auf den Ernteertrag aus.

Desweiteren ist durch die DE-C-20 63 908 eine Sämaschine bekannt geworden, bei der an dem Rahmen der Sämaschine in dem Bereich der Laufradspuren Lockerungszinken angeordnet sind. Diese Lockerungszinken lockern den verfestigten Boden in den Laufradspuren auf, so dass das Saatgut anschliessend mit Hilfe von Säscharen in einem aufgelockerten Boden abgelegt werden kann. Nachteilig ist hierbei jedoch, dass durch die zusätzliche Anordnung von Lockerungszinken die Verstopfungsgefahr erheblich zwischen den Säscharen zunimmt. Ausserdem erfordert die Einstellung der Lockerungszinken einen Zeitaufwand.

Der Erfindung liegt die Aufgabe zugrunde, die Lockerung der verfestigten Streifen des Bodens eines Saatbettes wesentlich zu vereinfachen.

Diese Aufgabe wird erfindungsgemäss durch den kennzeichnenden Teil des Anspruchs 1 gelöst. Infolge dieser Massnahme wird auf einfachste Weise eine Lockerung der verfestigten Streifen des Bodens eines Saatbettes bis unterhalb des Saathorizontes, auf dem das Saatgut abgelegt wird, erreicht. Durch diesen Auflockerungseffekt bis unter den Saathorizont wird die Ablage der Saatkörner positiv beeinflusst, die Saatkörner werden in der richtigen Tiefe abgelegt, gleichmässig mit Boden bedeckt und die Wachstumsbedingungen werden entscheidend verbessert. Somit also der verfestigte Boden gelockert, in dem das Saatgut abgelegt wird.

Weiterhin ist erfindungsgemäss vorgesehen, dass an dem unteren Ende des Verlängerungsstückes ein zumindest zu einer Seite ragender Auflockerungskörper angeordnet ist, wobei der Auflockerungskörper von vorne nach hinten ansteigend, und die vordere Kante des Auflockerungskörpers in der Draufsicht gesehen schräg nach hinten verläuft. Das Verlängerungsstück und der Auflockerungskörper weisen an ihrer der Fahrtrichtung zugewandten Seite eine Schneide auf. Infolge dieser Massnahmen wird das Einziehen des Schäschares in den Boden sowie das Auflockern des Bodens unterhalb des Saathorizontes verbessert. Der verfestigte Boden wird über die gesamte Laufradspurbreite gelockert.

Eine andere Ausführung sieht vor, dass auf beiden Seiten des unteren Endes des Verlängerungsstückes jeweils ein Auflockerungskörper angeordnet ist. Durch diese Massnahme wird der Boden auf beiden Seiten des Verlängerungsstückes gelockert, was den Auflockerungseffekt erhöht und sich besonders für stark verfestigte Böden eignet. In einer weiteren Ausführung ist erfindungsgemäss vorgesehen, dass an dem Säschar, an dem das Verlängerungsstück angeordnet ist, in der Höhe der Scharspitze bzw. des Saatguthorizontes beidseitig abstehende Scharflügel angeordnet sind. Diese Anordnung der Scharflügel soll die Säfurche vergrössern und den Boden oberhalb des Saathorizontes besser auflockern, um eine noch bessere Saatgutablage im Boden zu erreichen.

In einer besonders vorteilhaften Ausführungsform ist vorgesehen, dass das Verlängerungsstück abnehmbar an einem Normalsäschar befestigt ist, wobei die Scharflügel an dem abnehmbar befestigbaren Verlängerungsstück angeordnet sind. Die Lockerungsschare können in erfindungsgemässer Weise derart an der Sämaschine angeordnet werden, dass sich die Lockerungsschare in der Laufradspur, die von den Laufrädern der Sämaschine und/oder von den Schlepperrädern des die Sämaschine ziehenden Schleppers erzeugt werden, befinden. Durch die abnehmbare Anordnung des Verlängerungsstückes an einem Normalsäschar wird es auf einfachste Weise ermöglicht, jedes beliebige Säschar der Sämaschine zu einem Lockerungsschar umzurüsten. Aufwendige Anlenkstellen, wie sie für die Anordnung von speziellen Lockerungszinken an Samaschinen erforderlich sind, entfallen.

Die Umrüstung der Normalsäschar zu Lockerungsscharen lässt sich in erfindungsgemässer Weise mit wenigen Handgriffen und ohne Werkzeug durchführen. Aufwendige Bauteile entfallen, so dass es sich bei der erfindungsgemässen Ausführung um eine einfache, preiswerte aber wesentliche Vereinfachung der Lockerung der verfestigten Streifen des Bodens eines Saatbettes handelt.

Es hat sich als zweckmässig erwiesen, dass die Verlängerungsstücke über eine Abschersicherung an dem Lockerungsschar angeordnet sind. Hierbei können die Verlängerungsstücke entweder mit dem Säschar bzw. mit der Tasche eines aufsteckbaren Lockerungsschares verbunden werden, so dass die Verlängerungsstücke beim Auftreffen auf im Boden festsitzenden Hindernissen ausweichen können, indem durch Abscheren der Abschersicherung das Verlängerungsstück nach hinten schwenkt und so das Säschar ohne Beschädigung über das Hindernis hinweggleiten kann. Anschliessend ist dann lediglich wieder die Abschersicherung zu reparieren, wobei das Verlängerungsstück wieder in seiner ursprünglichen Befestigungsstelle festgelegt wird. Dieses ist vor

allem dann zweckmässig, wenn eine mit den erfindungsgemässen Lockerungsscharen ausgerüstete Sämaschine nicht auf durch Bodenbearbeitungsgeräte zur Einsaat vorbereiteten Boden, sondern zur Direktsaat bzw. zur Grasnachsaat aufgesteckt wird.

Es sei darauf hingewiesen, dass diese Lockerungsschare nicht nur für die Lockerung von Laufradspuren eingsetzt werden können, sondern auch für andere Zwecke. So ist es beispielsweise möglich, die Normalsäschare einer Sämaschine mit aufsteckbaren Lockerungsscharen auszustatten, so dass diese Sämaschine mit den an den normalen Säscharen angeordneten Lockerungsscharen sowohl für die Grasnachsaat wie auch direkt zur Direktsaat, d. h. dass das Saatgut in einem unbearbeiteten Boden eingebracht wird, eingesetzt werden kann. Bei der Grasnachsaat sind die Lockerungsschare auf den in sehr engen Reihenabständen zueinander angeordneten Normalsäscharen aufgesteckt, so dass die Lockerungsschare in die Grasnarbe eindringen können und durch Einschneiden in diese Grasnarbe Schlitze erzeugen, in denen dann der Grassamen über die Dosiervorrichtungen der Sämaschine eingestreut werden kann. Dieses ist bereits in der europäischen Patentanmeldung EP-A-01 70 825, die unter Art. 54(3) EPÜ fällt, im einzelnen beschrieben.

Weitere Einzelheiten sind der Beispielsbeschreibung sowie den Zeichnungen zu entnehmen. Hierbei zeigen

Figur 1 das mit einem angeschweissten Verlängerungsstück in erfindungsgemässer Weise ausgebildete Säschar in der Seitenansicht,

Figur 2 das Säschar nach Figur 2 in der Vorderansicht,

Figur 3 der Auflockerungskörper des Säschares in der Ansicht III–III,

Figur 4 das mit einem abnehmbar angeordneten Verlängerungsstück ausgbildete Normalsäschar in der Seitenansicht,

Figur 5 das Säschar nach Figur 4 in der Vorderansicht,

Figur 6 eine andere Ausführungsform des Auflockerungskörpers,

Figur 7 das mit Scharflügeln versehene, abnehmbar an einem Normalsäschar angeordnete Verlängerungsstück,

Figur 8 das Säschar nach Figur 7 in der Vorderansicht und

Figur 9 eine weitere Ausführungsform eines erfindungsgemässen Sässchars.

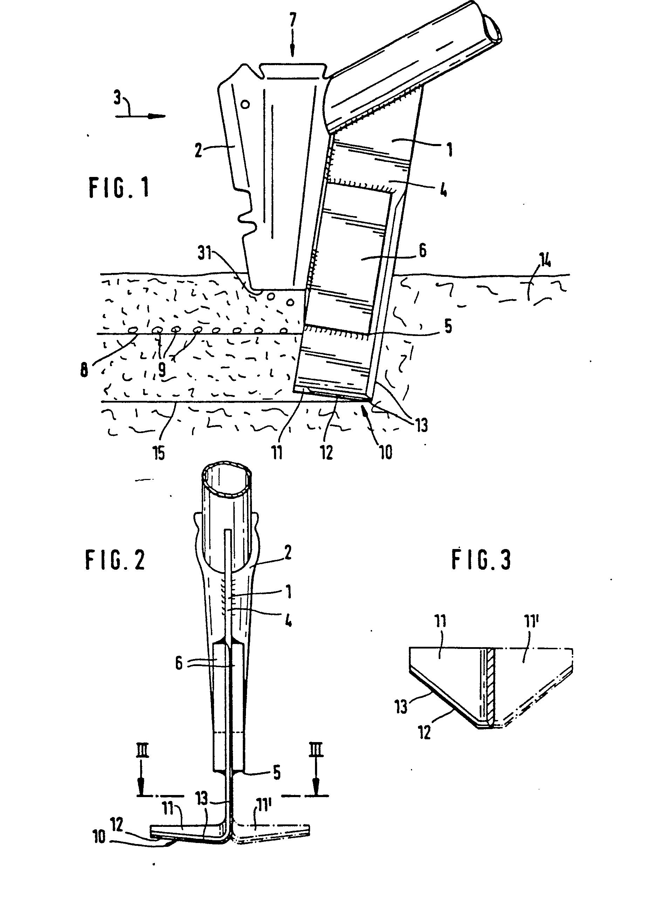

Die Figuren 1 und 2 zeigen das als Lockerungsschar 1 ausgebildete Säschar 2. An dem Säschar 2 ist an seiner der Fahrtrichtung 3 zugewandten Seite das Verlängerungsstück 4 angeschweisst. Das Verlängerungsstück 4 ragt über die Scharspitze 5 des Säschlitzaufweitkörpers 6 und in Betriebsstellung 7 über den Saathorizont 8, auf dem das Saatgut 9 im Bogen abgelegt wird, hinaus. Der Säschlitzaufweitkörper 6 ist am Verlängerungsstück 4, in Form von zwei Flacheisen, angeschweisst und sorgt für die Bildung einer Säfurche, in die das Saatgut 9 abgelegt wird. Am unteren Ende 10 des Verlängerungsstückes 4 ist der in Fahrtrichtung 3 gesehen nach rechts ragende Auflockerungskörper 11 derart am Verlängerungsstück 4 angeordnet, dass der Auflockerungskörper 11 von vorn nach hinten ansteigend und die vordere Kante 12 des Auflockerungskörpers 11 in Draufsicht gesehen schräg nach hinten verläuft. Die vordere Kante 12 des Verlängerungsstückes 4 und des Auflockerungskörpers 11 ist als Schneide 13 ausgebildet. Der Auflockerungskörper 11 lockert den Boden 14 unterhalb des Saathorizontes 8 bis auf den Tiefenlockerungshorizont 15 auf und verbessert somit die Wachstumsbedingungen für das abgelegte Saatgut 9.

In den Figuren 2 und 3 ist mit strichpunktierten Linien ein weiterer dem Auflockerungskörper 11 identischer Auflockerungskörper 11' angedeutet, so dass auf beiden Seiten des unteren Endes 10 des Verlängerungsstückes 4 jeweils ein Auflockerungskörper 11 und 11' angeordnet ist. Durch die Anordung des zweiten Auflockerungskörpers 11' soll der Auflockerungseffekt auf besoders stark verfestigten Böden erhöht werden, da jetzt der Boden auf beiden Seiten des Verlängerungsstükkes 4 gelockert wird.

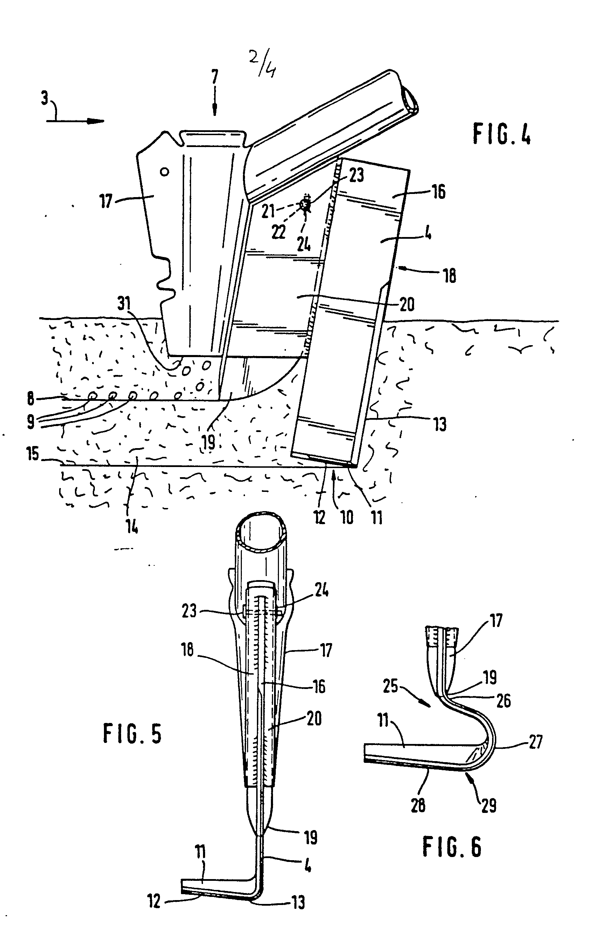

Eine besonders vorteilhafte erfindungsgemässe Ausführung des als Lockerungsschar 16 ausgebildeten Normalsäschares 17 zeigen die Figuren 4 und 5. Bei dem Lockerungsschar 16 handelt es sich um einen Lockerungsscharkörper 18, der auf dem Normalsäschar 17 lösbar und abnehmbar angeordnet ist. Der Lockerungsscharkörper 18 besteht in seinem vorderen Bereich aus dem Verlängerungsstück 4 und nach dem am unteren Ende 10 des Verlängerungsstückes 4 nach einer Seite ragenden Auflockerungskörper 11. Das Verlängerungsstück 4 ragt über die Scharspitze 19 des Normalsäschares 17 hinweg. Der Auflockerungskörper 11 ist derart am Verlängerungsstück befestigt, dass der Auflockerungskörper 11 von vorn nach hinten ansteigend und die vordere Kante 12 des Auflockerungskörpers 11' in der Draufsicht gesehen schräg nach hinten verläuft. Die vordere Kante 12 des Verlängerungsstückes 4 und des Auflockerungskörpers 11 ist als Schneide 13 ausgebildet. Das Verlängerungsstück 4 ist an eine im Querschnitt U-förmige Tasche 20 angeschweisst. Die Tasche 20 erstreckt sich über mehr als die Hälfte der Höhe des Normalsäschares 17 und umfasst den vorderen schmalen Bereich des Normalsäschares 17. Weiterhin weist die Tasche 20 in ihrem vorderen Bereich die Bohrung 21 auf, die mit der in dem Normalsäschar 17 befindliche Bohrung 22 zur Deckung zu bringen ist. Durch den durch diese Bohrung 21 und 22 zu steckenden Sicherungsbolzen 23 mit dem Federstecker 24 wird der Lockerungsscharkörper 18 auf dem Normalsäschar 17 gesichert. Der Auflockerungskörper 11 lockert auch hier den Boden 14 unterhalb des Saathorizontes 8 bis auf den Tiefenlokkerungshorizont 15 auf und verbessert somit die Wachstumsbedingungen für das abgelegte Saatgut 9.

Figur 6 zeigt eine andere Ausführungsform des Auflockerungskörpers 25. Durch eine entsprechende Formgebung des Auflockerungskörpers 25 wird die Lockerung des Bodens auf beiden Seiten des Verlängerungsstückes 4 im Gegensatz zu dem in der Figur 2 mit zwei Auflockerungskörpern 11 und 11' dargestellten Lockerungsschar 1, mit nur einem Auflockerungskörper 25 erreicht. Der Auflockerungskörper 25 weist direkt unterhalb der Scharspitze 19 des Normalsäschares 17, entgegen der Fahrtrichtung 3 gesehen, einen Bogen 26 nach rechts auf, der dann in einen Halbkreis 27 übergeht, so dass die als Schneide 28 ausgebildete vordere Kante 29 des Auflockerungskörpers 25 wieder rechtwinklig zum Verlängerungsstück 4 angeordnet ist. Der gesamte Auflockerungskörper 25 ist derart geformt, dass er von vorn nach hinten ansteigend verläuft.

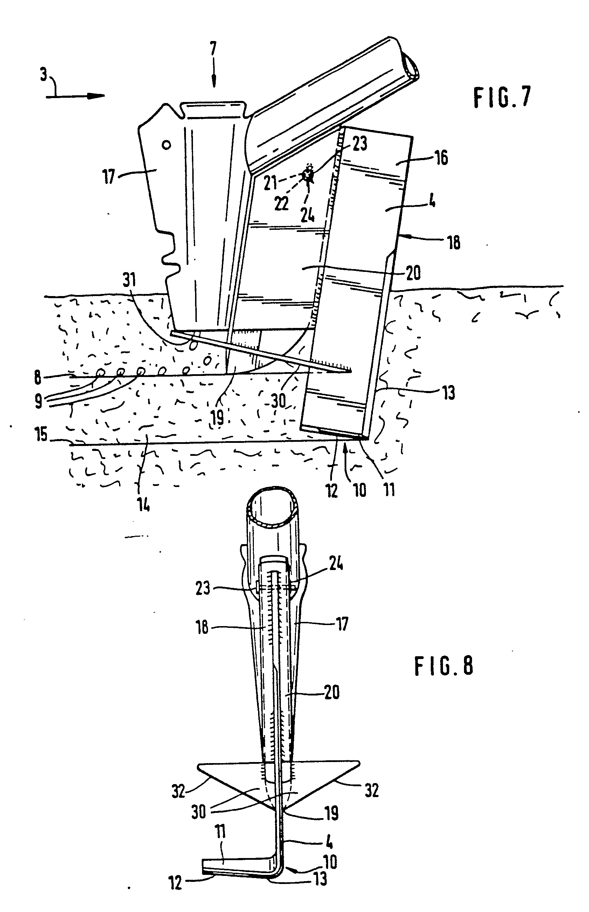

Das als Lockerungsschar 16 ausgebildete Normalsäschar 17 gemäss den Figuren 7 und 8 unterscheidet sich nur unwesentlich vom Lockerungsschar 16 gemäss den Figuren 4 und 5. Der einzige Unterschied besteht in der Anordnung von seitlich abstehenden Scharflügeln 30. Diese Scharflügel 30 sind an dem Verlängerungsstück 4 und der Tasche 20 des Lockerungsscharkörpers 18, in der Höhe der Scharspitze 19 bzw. des Saathorizontes 8 beidseitig abstehend, angeordnet. Diese Scharflügel 30 verlaufen in etwa von der Mitte des Verlängerungsstückes 4 nach hinten ansteigend und enden hinter dem Saatgutauslauf 31. In der Draufsicht gesehen verläuft die vordere Kante 32 der Scharflügel 30 schräg nach hinten-aussen. Der am unteren Ende 10 des Verlängerungskörpers 4 angeordnete Auflockerungskörper 11 sorgt für die Lockerung des Bodens 14 unterhalb des Saathorizontes 8 bis auf den Tiefenlockerungshorizont 15 und die Scharflügel 30 für eine bessere Lockerung des Bodens oberhalb des Saatguthorizontes 8 sowie für eine breitere Säfurche, in die das Saatgut in Breitverteilung abgelegt wird.

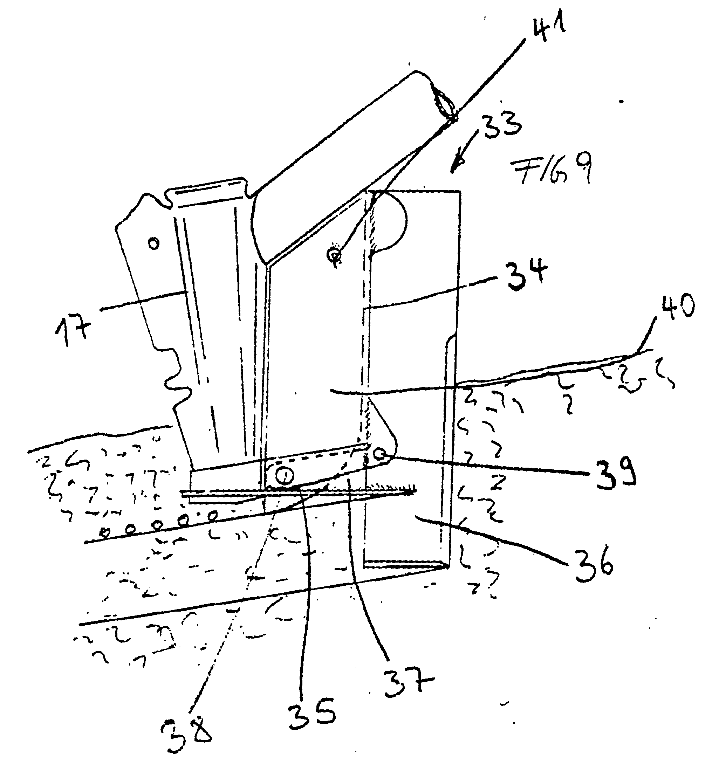

Das Lockerungsschar 33 gemäss Figur 9 ist an einem Normalsäschar 17 befestigt. Bei dem Lockerungsschar 33 handelt es sich um einen Lockerungsscharkörper, der auf Normalsäscharen lösbar und abnehmbar anzuordnen ist. Der Lockerungsscharkörper 34 weist in Höhe der Scharspitze des Normalsäschares die seitlich abstehenden Scharflügel 35 auf, die an dem Verlängerungsstück 36 befestigt sind. Das Verlängerungsstück 36 weist auf seiner Rückseite im Bereich der Scharflügel 35 die seitliche hintere Strebe 37 auf. Über diese seitlichen Streben 37 sind das Verlängerungsstück 36 und die Scharflügel 37 mit den grösseren Bolzen 38 und den kleineren Bolzen 39 an der das Normalsäschar 17 umfassenden Tasche 40 befestigt. Die Tasche 40 ist in ihrem oberen Bereich über den Bolzen 41 an dem Normalsäschar 17 angeordnet. Der hintere Bolzen 38 weist einen grösseren Durchmesser als der vordere Bolzen 39 auf. Der kleinere Bolzen 39 ist derart ausgelegt, dass er beim Auftreffen des Auflockerungskörpers 33 auf ein Hindernis abschert, bevor es zu Verbindungen an dem Säschar 17 kommt. Wenn der kleinere Bolzen 39 aufgrund des Auftreffens des Lockerungskörpers auf ein Hindernis abschert, so schwenkt das Verlängerungsstück 36 mit den Scharflügeln 35 um die durch den Bolzen 38 verlaufende Schwenkachse nach hinten, so dass der Lockerungskörper 33 über das Hindernis hinweggleiten kann. Dieses ist von sehr grosser Bedeutung, wenn die Schneide des Auflockerungskörpers 33 nicht, wie in der Figur 9 dargestellt, schleppend, sondern auf Griff gestellt verläuft.

## Patentansprüche

1. Sämaschine mit einem Rahmen und einem Vorratsbehälter, von dem aus über Dosierelemente das im Vorratsbehälter befindliche Saatgut über Leitungsrohre und daran angeschlossene und in aufrechter Ebene bewegbar angeordnete Säschare (2, 17) in den Boden (14) eingebracht wird, wobei einige der Säschare als Lockerungsschare (1,16) ausgebildet sind, dadurch gekennzeichnet, dass die als Lockerungsschare (1,16) ausgebildeten Säschare (2, 17) ein Verlängerungsstück (4) aufweisen, welches über die Scharspitze (5, 19) und in Betriebsstellung (7) über den Saatguthorizont (8), auf dem das Saatgut (9) abgelegt wird, nach unten hinausragt, wobei an dem unteren Ende (10) des Verlängerungsstückes (4) ein zumindest zu einer Seite ragender Auflockerungskörper (11) angeordnet ist.

2. Sämaschine nach Anspruch 1, dadurch gekennzeichnet, dass auf beiden Seiten des unteren Endes (10) des Verlängerungsstückes (4) jeweils ein Auflockerungskörper (11, 11') angeordnet ist.

3. Sämaschine nach wenigstens einem der Ansprüche 1 oder 2, dadurch gekennzeichnet, dass der Auflockerungskörper (11) von vorne nach hinten ansteigend verläuft.

4. Sämaschine nach wenigstens einem der vorangegangenen Ansprüche, dadurch gekennzeichnet, dass die vordere Kante (12) des Auflockerungskörpers (11) in Draufsicht gesehen schräg nach hinten verläuft.

5. Sämaschine nach wenigstens einem der vorangegangenen Ansprüche, dadurch gekennzeichnet, dass an dem Säschar (17), an dem das Verlängerungsstück (4) angeordnet ist, in der Höhe der Scharspitze (19) bzw. des Saatguthorizontes (8) beidseitig seitlich abstehende Scharflügel (30) angeordnet sind.

6. Sämaschine nach wenigstens einem der vorangegangenen Ansprüche, dadurch gekennzeichnet, dass das Verlängerungsstück (4) abnehmbar an einem Normalsäschar (7) befestigt ist.

7. Sämaschine nach Anspruch 6, dadurch gekennzeichnet, dass an dem abnehmbar befestigbaren Verlängerungsstück (4) die Scharflügel (30) angeordnet sind.

8. Sämaschine nach wenigstens einem der vorangegangen Ansprüche, dadurch gekennzeichnet, dass die Lockerungsschare (1, 16) in der Laufradspur, die von den Laufrädern der Sämaschine erzeugt werden, angeordnet sind.

9. Sämaschine nach wenigstens einem der vorangegangenen Ansprüche, dadurch gekennzeichnet, dass die Lockerungsschare (1,16) in der Laufradspur, die von den Schlepperrädern des die Sämaschine ziehenden Schleppers erzeugt werden, angeordnet sind.

10. Sämaschine nach einem der vorstehenden Ansprüche, dadurch gekennzeichnet, dass das Verlängerungsstück (4) und/oder der Auflockerungskörper (11) an seiner der Fahrtrichtung (3) zugewandten Seite eine Schneide (13, 28) aufweist.

11. Sämaschine nach Anspruch 1, dadurch gekennzeichnet, dass das Verlängerungsstück (36) mit einer Abschersicherung (39) an der Tasche (40) des Lockerungsschars (33) befestigt ist.

12. Sämaschine nach Anspruch 11, dadurch gekennzeichnet, dass das Verlängerungsstück (36) mit zwei Bolzen (38, 39), die einen unterschiedlichen Durchmesser aufweisen, an der Tasche (40) Lockerungsschars (33) befestigt ist.

13. Sämaschine nach Anspruch 12, dadurch gekennzeichnet, dass der kleinere Bolzen (39) derart ausgelegt ist, dass er beim Auftreffen auf ein Hindernis abschert, bevor es zu Verbiegungen an dem Säschar (17) kommt.

## Revendications

1. Semoir comprenant un châssis et une trémie d'alimentation à partir duquel des éléments de dosage transfèrent les semences contenues dans la trémie d'alimentation, par des conduites et des socs de semoir (2, 17) raccordés à ces conduites et mobiles dans un plan vertical pour introduire les semences dans le sol (14), quelques socs étant en forme de socs d'ameublissement (1, 16), semoir caractérisé en ce que les socs de semoir (2, 17) réalisés sous forme de socs d'ameublissement (1, 16) comportent un prolongement (4) qui dépasse la pointe de soc (5, 19) et qui en position de fonctionnement (7) descendent en-dessous du niveau de dépôt (8) des semences (9), l'extrémité inférieure (10) du prolongement (4) ayant au moins un organe d'ameublissement (11) dirigé vers un autre côté.

2. Semoir selon la revendication 1, caractérisé en ce que des deux côtés de l'extrémité inférieure (10) du prolongement (4) on a chaque fois un organe d'ameublissement (11, 11').

3. Semoir selon au moins l'une des revendications 1 ou 2, caractérisé en ce que l'organe d'ameublissement (11) remonte de l'avant vers l'arrière.

4. Semoir selon au moins l'une quelconque des revendications précédentes, caractérisé en ce que l'arête avant (12) de l'organe d'ameublissement (11) est inclinée vers l'arrière en vue de dessus.

5. Semoir selon au moins l'une quelconque des revendications précédentes, caractérisé en ce que sur le soc de semoir (17) portant le prolongement (4), à la hauteur de la pointe de soc (19) ou du niveau de dépôt des semences (8) on a des ailes de soc (30) en saillie latéralement de part et d'autre.

6. Semoir selon l'une au moins des revendications précédentes, caractérisé en ce que le prolongement (4) est fixé de manière amovible sur un soc normal de semoir (17).

7. Semoir selon la revendication 6, caractérisé en ce que les ailes de soc (30) sont fixés sur le prolongement (4) susceptible d'être fixé de manière amovible.

8. Semoir selon au moins l'une des revendications précédentes, caractérisé en ce que les socs d'ameublissement (1, 16) sont situés au niveau des traces de roues formées par les roues du semoir.

9. Semoir selon au moins l'une des revendications précédentes, caractérisé en ce que les socs d'ameublissement (1, 16) sont prévus au niveau de la trace des roues laissée par les roues du tracteur qui tracte le semoir.

10. Semoir selon l'une des revendications précédentes, caractérisé en ce que le prolongement (4) et/ou l'organe d'ameublissement (11) comportent au moins un arête (13, 28) sur leur côté tourné dans le sens du déplacement (3).

11. Semoir selon la revendication 1, caractérisé en ce que le prolongement (36) et un moyen de protection par cisaillement (39) est fixé sur la poche (40) du soc d'ameublissement (33).

12. Semoir selon la revendication 11, caractérisé en ce que le prolongement (36) et deux goujons (38, 39) de diamètre différent sont fixés sur la poche (40) du soc d'ameublissement (33).

13. Semoir selon la revendication 12, caractérisé en ce que le goujon (39) le plus petit est tel qu'à la rencontre d'un obstacle il soit cisaillé avant que le soc de semoir (17) ne se déforme.

## Claims

1. Seed drill, including a frame and a hopper, from which, via metering elements, the seed material situated in the hopper is introduced into the ground (14) via connecting tubes and sowing coulters (2, 17) which are in communication therewith and are displaceably disposed in an upright plane, some of the sowing coulters being in the form of loosening coulters (1, 16) characterised in that the sowing coulters (2, 17), which are in the form of loosening coulters (1, 16) have an extension-piece (4) which protrudes downwardly beyond the coulter tip (5, 19) and, in the operative position (7), beyond the seed level (8) at which the seed material (9) is deposited, a loosening-up member (11) being disposed at the lower end (10) of the extension-piece (4) and protruding to at least one side.

2. Seed drill according to claim 1, characterised in that a loosening-up member (11, 11') is disposed on each side of the lower end (10) of the extension-piece (4).

3. Seed drill according to at least one of claims 1 or 2, characterised in that the loosening-up member (11) extends from front to back in an ascending manner.

4. Seed drill according to at least one of the preceding claims, characterised in that the front edge (12) of the loosening-up member (11) extends inclinedly rearwardly, when viewed from above.

5. Seed drill according to at least one of the preceding claims, characterised in that laterally protruding coulter vanes (30) are disposed on both sides of the sowing coulter (17), on which the extension-piece (4) is disposed, on a level with the coulter tip (19), that is to say at the seed level (8).

6. Seed drill according to at least one of the preceding claims, characterised in that the extension-piece (4) is detachably mounted on a standard sowing coulter (17).

7. Seed drill according to claim 6, characterised in that the coulter vanes (30) are disposed on the detachably mountable extension-piece (4).

8. Seed drill according to at least one of the preceding claims, characterised in that the loosening coulters (1, 16) are disposed in the running wheel tracks which are produced by the running wheels of the seed drill.

9. Seed drill according to at least one of the preceding claims, characterised in that the loosening coulters (1, 16) are disposed in the running wheel tracks which are produced by the tractor wheels of the tractor towing the seed drill.

10. Seed drill according to any of the preceding claims, characterised in that the extension-piece (4) and/or the loosening-up member (11) has a cutting edge (13, 28) on its side facing the direction of travel (3).

11. Seed drill according to claim 1, characterised in that the extension-piece (36) in mounted on the pocket assembly (40) of the loosening coulter (33) by means of a safety shear-pin arrangement (39).

12. Seed drill according to claim 11, characterised in that the extension-piece (36) in secured to the pocket assembly (40) of the loosening coulter (33) by means of two pins (38, 39) which have different diameters.

13. Seed drill according to claim 12, characterised in that the smaller pin (39) is so adapted that, if an obstacle is encountered, it shears-off before the sowing coulter (17) suffers any deformation.

1/4

FIG.1

FIG.2

FIG.3

2/4

FIG.4

FIG.5

FIG.6

FIG.7

FIG.8

11

FIG 9